# EUROPÄISCHE PATENTSCHRIFT

(11) **EP 1 921 356 B1**
(45) Veröffentlichungstag und Bekanntmachung des Hinweises auf die Patenterteilung: **09.12.2015**
(21) Anmeldenummer: 07020563.8
(22) Anmeldetag: 20.10.2007
(51) Int. Cl.: F16J 15/34

(54) **Gleitringdichtung, Gleitringdichtungsanordnung und deren Verwendung**
Slip ring seal, slip ring seal assembly and its application
Joint glissant, agencement de joint glissant et leur utilisation

(30) Priorität: 09.11.2006 DE 102006053165
(43) Veröffentlichungstag der Anmeldung: 14.05.2008
(73) Patentinhaber: Carl Freudenberg KG, 69469 Weinheim (DE)
(72) Erfinder: Simon, Clemens, 82362 Weilheim (DE); Lang, Klaus, Dr., 82547 Beuerberg (DE); Feigl, Peter, 82335 Höhenrain (DE)

(56) Entgegenhaltungen:
- EP-A- 1 054 196
- EP-A- 1 205 695
- EP-A- 1 231 393
- FR-A- 1 252 558

## Beschreibung

Die Erfindung betrifft eine Gleitringdichtung, die eine abzudichtende Welle umschließt, umfassend einen Gegenring, wobei die Welle einen Bestandteil der Gleitringdichtung bildet und einstückig ineinander übergehend und materialeinheitlich mit dem Gegenring ausgebildet ist, wobei der Gegenring eine erste Dichtfläche aufweist, die in axialer Richtung elastisch nachgiebig eine zweite Dichtfläche eines Gleitrings dichtend anliegend berührt.

### Stand der Technik

Eine solche Gleitringdichtung ist aus der FR-A-1 252 558 bekannt. Die Anlaufstelle für den Gleitring wird durch einen Gegenring gebildet, der einen Bestandteil einer abzudichtenden Welle bildet.

Eine weitere entsprechende Gleitringdichtung ist aus der DE 24 14 727 A1 bekannt, Der Gegenring wird durch den Bund einer Welle gebildet, wobei die erste Dichtfläche des Gegenrings von einer zweiten Dichtfläche eines federkraftbeaufschlagten Gleitrings anliegend berührt wird. Die zweite Dichtfläche des Gleitrings umfasst eine gleit- und widerstandsfähige Beschichtung.

Aus der EP 1 054 196 A2 ist eine weitere Gleitringdichtung bekannt, die zusammen mit einer abzudichtenden Welle und einem Gehäuse eine Gleitringdichtungsanordnung bildet. An dem Gehäuse ist drehgesichert, jedoch axial beweglich, koaxial zu der Welle der Gleitring gehalten, wobei auf der Welle zur gemeinsamen Drehung mit dieser der Gegenring angeordnet ist. In wenigstens einer der Dichtflächen, vorzugsweise in der Dichtfläche des Gleitrings, sind gasförderwirksame Strukturen oder Ausnehmungen eingebracht. Als Fertigungsverfahren, durch die diese Strukturen oder Ausnehmungen eingebracht werden, sind Schleifen, Lasern oder Prägen genannt. Der Gleitring ist gegenüber dem Gehäuse durch eine Sekundärdichtung in Gestalt eines O-Rings abgedichtet, wobei der Gegenring als separat hergestelltes Einzelteil auf der Welle montiert ist. Der Gegenring ist zwischen einem Wellenabsatz und einer auf der Welle aufgesetzten Buchse eingeklemmt, so dass sich die Drehung der Welle schlupffrei auf den Gegenring übertragen lässt. Als Material für den Gleitring ist ein Kohlenstoffmaterial genannt; der Gegenring kann demnach aus einem Material der Siliciumcarbid, Siliciumnitrid, Wolframkarbid und Titan umfassenden Gruppe gebildet sein.

Eine weitere Gleitringdichtungsanordnung mit einer Gleitringdichtung ist aus der DE 44 15 115 C 1 bekannt. Die Gleitringdichtung umfasst einen Gegenring und einen Stellring, die relativ unverdrehbar miteinander verbunden sind und eine abzudichtende Welle relativ unverdrehbar umfangsseitig umschließen. Der Stellring ist dabei durch mehrere gleichmäßig in Umfangsrichtung verteilte schraubenförmige Befestigungselemente relativ unverdrehbar mit der Welle verbunden, wobei sowohl der Gegenring gegenüber dem Stellring als auch der Stellring gegenüber der Welle durch O-Ringe aus elastomerem Werkstoff abgedichtet sind. Um eine drehfeste Zuordnung des Gegenrings zum Stellring sicherzustellen, sind sich in axialer Richtung erstreckende, stiftförmige Mitnehmer vorgesehen.

Aus der EP 1 205 695 A2 ist eine Gleitringdichtung bekannt, die in einem Verdichter zur Anwendung gelangt, wobei der Gegenring, bezogen auf die abzudichtende Welle, separat ausgebildet ist, durch einen O-Ring gegenüber der Welle abgedichtet ist und gemeinsam mit der Welle umläuft.

### Darstellung der Erfindung

Der Erfindung liegt die Aufgabe zugrunde, eine Gleitringdichtung und eine Gleitringdichtungsanordnung der vorbekannten Art derart weiterzuentwickeln, dass diese einen wesentlich einfacheren, teilearmen Aufbau aufweisen und deshalb in fertigungstechnischer und wirtschaftlicher Hinsicht einfacher und kostengünstiger herstellbar sind. Die Gefahr von Montagefehlem soll auf ein Minimum reduziert sein.

Diese Aufgabe wird erfindungsgemäß durch die Merkmale von Anspruch 1, 6 und 7 gelöst. Auf vorteilhafte Ausgestaltungen nehmen die Unteransprüche Bezug.

Zur Lösung der Aufgabe ist eine Gleitringdichtung vorgesehen, bei der die erste Dichtflächedes Gegenrings, der einstückig ineinander übergehend und materialeinheitlich mit der Welle ausgebildet ist, gleichmäßig in Umfangsrichtung zueinander benachbart angeordnete gasförderwirksame Ausnehmungen aufweist, die sich im Wesentlichen in radialer Richtung erstrecken. Hierbei ist von Vorteil, dass der Gegenring und die Welle eine Einheit bilden, die wegen ihrer Einstückigkeit keiner separaten Dichtringe zur Abdichtung bedarf. Außerdem sind - im Gegensatz zur genannten Gleitringdichtung aus dem Stand der Technik - keine Verdrehsicherungen vom Stellring zur Welle und vom Stellring zum Gegenring erforderlich, die dafür sorgen, dass Welle und Gegenring einander drehfest zugeordnet sind.
Weiter ist von Vorteil, dass die Fertigung der Gleitringdichtung und der Gleitringdichtungsanordnung dadurch vereinfacht ist, dass die einteilige Einheit wesentlich einfacher ausgewuchtet werden kann, als eine Welle, auf der kraft- und/oder formschlüssig separat hergestellte Bauteile, wie beispielsweise Stellring oder Gegenring, befestigt sind.

Der Gegenring weist eine erste Dichtfläche auf, die in axialer Richtung elastisch nachgiebig eine zweite Dichtfläche eines Gleitrings dichtend anliegend berührt.

Die erste Dichtfläche des Gegenrings, der einstückig ineinander übergehend und materialeinheitlich mit der Welle ausgebildet ist, weist gleichmäßig in Umfangsrichtung zueinander benachbart angeordnete gasförderwirksame Ausnehmungen auf, die sich im Wesentlichen in radialer Richtung erstrecken; bevorzugt sind die Ausnehmungen bogenförmig. Dies ist insbesondere dann sinnvoll, wenn die zuvor beschriebene Gleitringdichtung oder die zuvor beschriebene Gleitringdichtungsanordnung in Gasturbinen Verwendung findet. Gasförderwirksame Ausnehmungen in der Dichtfläche von Gegenringen vorzusehen, ist allgemein bekannt, beispielsweise aus der EP 1 054 196 A2. Durch diese gasförderwirksamen Ausnehmungen wird sichergestellt, dass das abzudichtende gasförmige Medium weitgehend frei von nicht-gasförmigen Bestandteilen, wie beispielsweise Ölpartikeln, bleibt. Durch die gasförderwirksamen Ausnehmungen wird erreicht, dass in allen Betriebszuständen der Gleitringdichtung zwischen den Dichtflächen von Gegenring und Gleitring ein ausreichend stabiles Gaspolster besteht, wobei durch die Ausgestaltung der gasförderwirksamen Ausnehmungen der Leckageverlust minimiert wird und eine Leckageströmung vom abzudichtenden Raum in Richtung Umgebung verhindert, dass nicht-gasförmige Bestandteile zwischen die Gleitflächen gelangen. Gasförderwirksame Ausnehmungen kommen in gasgeschmierten Gleitringdichtungen zur Anwendung.

Die Einheit, die durch den Gegenring und die Welle gebildet ist, besteht bevorzugt aus einem gehärteten Stahl. Eine derartige Einheit ist kostengünstig herstellbar, da sie bevorzugt spanabhebend, insbesondere durch Drehen, herstellbar ist. Um die geforderte Dichtwirkung zu erreichen, ist eine hohe Güte der Dichtfläche des Gegenrings erforderlich, die bei Verwendung des Fertigungsverfahrens "Hartdrehen" dadurch erreicht werden kann, dass nur mit einem geringen Vorschub gearbeitet wird. In Verbindung mit hochwertigen Drehmaschinen und harten Werkzeugstählen lassen sich so Oberflächen erzeugern, die bei wesentlich vereinfachter Herstellung die selben guten Gebrauchseigenschaften wie geläppte oder polierte Oberflächen aufweisen.

Zumindest die erste Dichtfläche weist eine Rautiefe Ra von 0,1 bis 0,3 auf. Eine solche Obertlächenrauhigkeit lässt sich durch das zuvor beschriebene Hartdrehen erreichen und ist für die Anwendung in Gleitringdichtungen zur Erzielung einer guten Dichtheit völlig ausreichend.

### Kurzbeschreibung der Zeichnung

Ausführungsbeispiele werden-nachfolgend anhand der schematisch dargestellten Figuren 1 bis 6 näher beschrieben.

Die Figuren zeigen:
- Fig.1:: einen Längsschnitt durch eine Gleitringdichtungsanordnung,
- Fig. 2:: die Einheit, die Gleitring und Welle umfasst, entlang des Schnitts A-A aus Figur 1,
- Fig. 3:: ein Ausführungsbeispiel einer Gleitring-Doppeldichtung in symmetrischer Ausführung,
- Fig. 4:: eine Gleitring-Doppeldichtung, die hintereinander angeordnet ist,
- Fig. 5:: eine Gleitringdichtung in Koaxialanordnung und
- Fig. 6:: eine Gleitringdichtung, die gegen ein Axiallager angeordnet ist.

### Ausführung der Erfindung

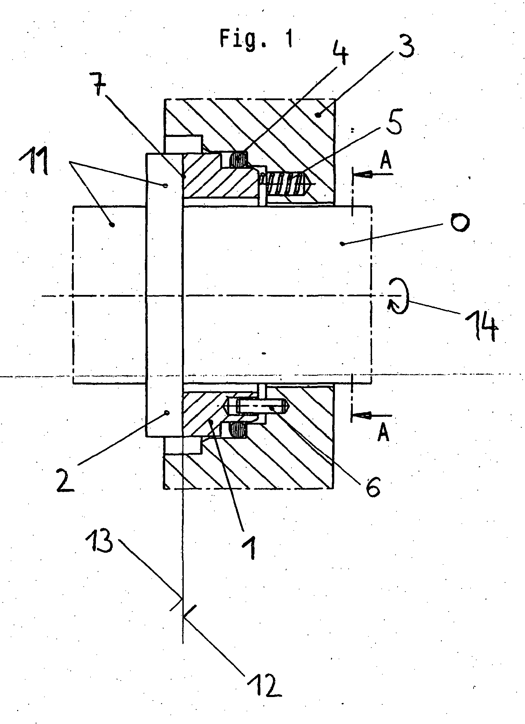

In Figur 1 ist ein Ausführungsbeispiel einer erfindungsgemäßen Gleitringdichtungsanordnung gezeigt, die die erfindungsgemäße Gleitringdichtung umfasst. Die abzudichtende Welle 0 und der Gegenring 2 sind einstückig ineinander übergehend und materialeinheitlich ausgebildet und bilden gemeinsam die Einheit 11. Der Gegenring 2 und die Welle 0 bestehen aus einem gehärteten Stahl und sind spanabhebend, durch Hartdrehen erzeugt. Für die spanabhebende Herstellung der Einheit 11 wird nur mit geringem Vorschub gedreht, um die erste Dichtfläche 12 des Gegenrings 2 mit einer Rautiefe Ra herstellen zu können, die 0,1 bis 0,3 beträgt. Eine derartige Rautiefe ist durch das preisgünstige Fertigungsverfahren "Hartdrehen" herstellbar und ausreichend glatt, um gute Gebrauchseigenschaften der Gleitringsdichtung sicherzustellen.

Der Gleitring 1 weist eine zweite Dichtfläche 13 auf, die die erste Dichtfläche 12 des Gegenrings 2 in axialer Richtung elastisch nachgiebig und dichtend anliegend berührt. Der Gleitring 1 ist im hier dargestellten Ausführungsbeispiel in einem Gehäuse 3 angeordnet, das von der abzudichtenden Welle 0 durchdrungen ist. Der Gleitring 1 ist durch einen O-Ring 4 gegenüber dem Gehäuse 3 abgedichtet. Das Gehäuse 3 und der Gleitring 1 stehen, bezogen auf den mit der Welle 0 umlaufenden Gegenring 2, fest.

Die elastische Anpressung der ersten Dichtfläche 12 des Gegenrings 2 an die zweite Dichtfläche 13 des Gleitrings 1 erfolgt durch eine Druckfeder 5, die innerhalb des Gehäuses 3 abgestützt ist.

Es ist von hervorzuhebendem Vorteil, dass durch die einstückige, materialeinheitliche Ausgestaltung der Einheit 11 in diesem Bereich keine separat herzustellenden und zu montierenden Dichtungen vorzusehen sind, um die Welle 0 gegenüber dem Gegenring 2 abzudichten. Die Einheit 11 ist einfach und kostengünstig herstellbar, montierbar und weist insgesamt kompakte Abmessungen, insbesondere in axialer Richtung, auf.

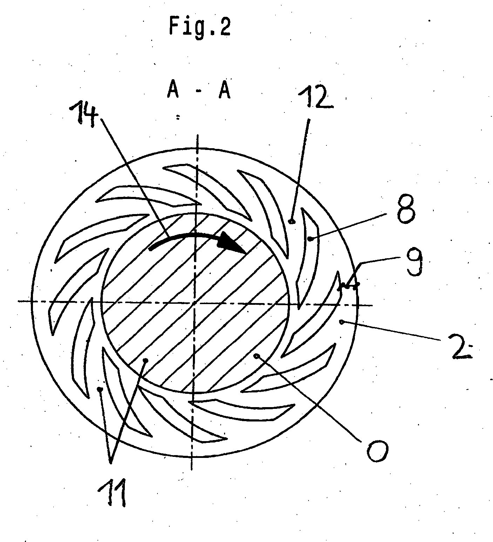

In Figur 2 ist der Schnitt A-A aus Figur 1 gezeigt, wobei in Figur 2, der besseren Übersichtlichkeit wegen, nur die Einheit 11, bestehend aus Gegenring 2 und Welle 0, gezeigt ist. Die erste Dichtfläche 12 ist mit gleichmäßig in Umfangsrichtung 14 zueinander benachbart angeordneten gasförderwirksamen Ausnehmungen 8 versehen, die sich im Wesentlichen bogenförmig in radialer Richtung erstrecken. Die gasförderwirksamen Ausnehmungen 8 bewirken, dass bei Drehung der Welle 0 ein Gas zwischen die Dichtflächen 12, 13 gepumpt und dadurch zwischen den genannten Dichtflächen 12, 13 ein Druck aufgebaut wird, der zur Trennung der Dichtflächen 12, 13 führt, wobei zwischen den Dichtflächen 12, 13 ein Gaspolster ausgebildet wird.

Die Herstellung der gasförderwirksamen Ausnehmungen 8 erfolgt durch einen Drehmeißel, der synchron zur Drehbewegung eine Hin- und Her-Bewegung ausführt. Diese Bewegung entspricht dem Tiefenverlauf der Ausnehmungen 8 auf einer Umfangslinie. Der Drehmeißel taucht bei einer Umdrehung entsprechend der Anzahl der Ausnehmungen 8 in das Werkstück ein. Dadurch, dass die synchronisierte Schwingbewegung während des Plandrehens auch noch in der Phase versetzt wird, werden keine geraden, sondern bogenförmige Ausnehmungen 8 hergestellt. Prinzipiell kann aber durch geeignete Steuerung der Meißelbewegung jede beliebige 3D-Form der Ausnehmungen 8 erzeugt werden. Die Steuerung kann über schnelle CNC-Achsen realisiert werden. Die Koordination übernehmen schnelle CPU's.

Entscheidend ist, dass die Ausnehmungen 8 und die erste Dichtfläche 12 des Gegenrings 2 in einer Aufspannung gefertigt werden, weil nur so die erforderlichen Genauigkeiten erreicht werden. Die Ausnehmungen 8 sind so ausgeführt, dass sie am Umfang des Gegenrings 2 einen Dichtdamm 9 bilden.

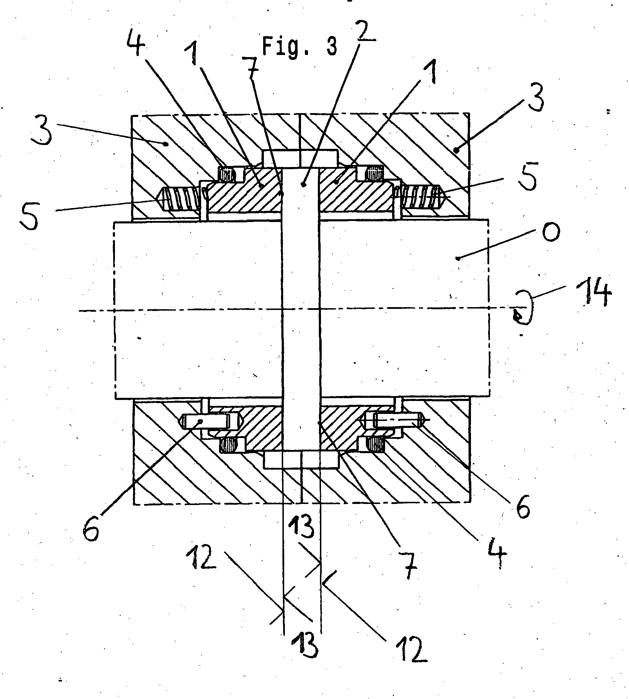

In Figur 3 ist eine Gleitring-Doppeldichtung in symmetrischer Ausführung gezeigt, wobei sich zwei Gleitringe 1.1, 1.2 an einen gemeinsamen Gegenring 2 anlegen, der mit der Welle 0, wie auch in Figur 1 gezeigt, einstückig ineinander übergehend und materialeinheitlich ausgebildet ist.

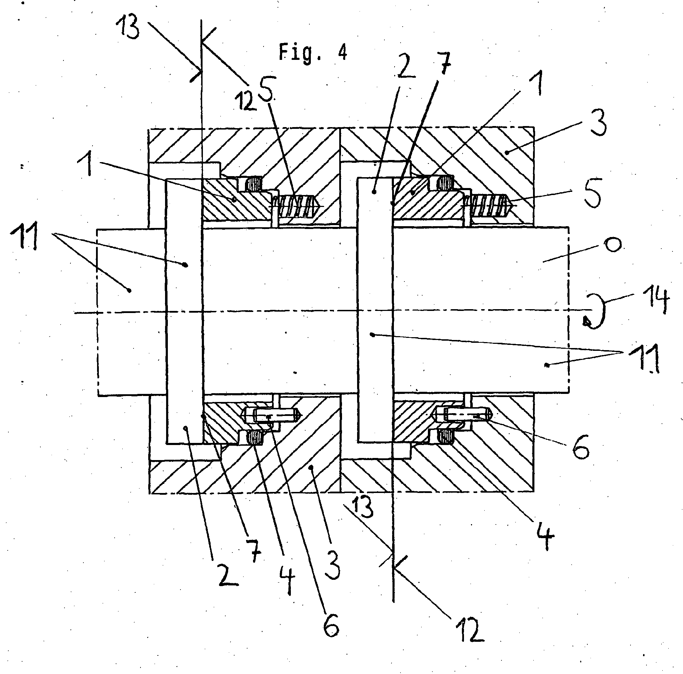

In Figur 4 ist eine Gleitring-Doppeldichtung dargestellt, bei der zwei Gleitringdichtungen, jeweils entsprechend der Gleitringdichtung aus Figur 1, hintereinander in einer funktionstechnischen Reihenschaltung angeordnet sind.

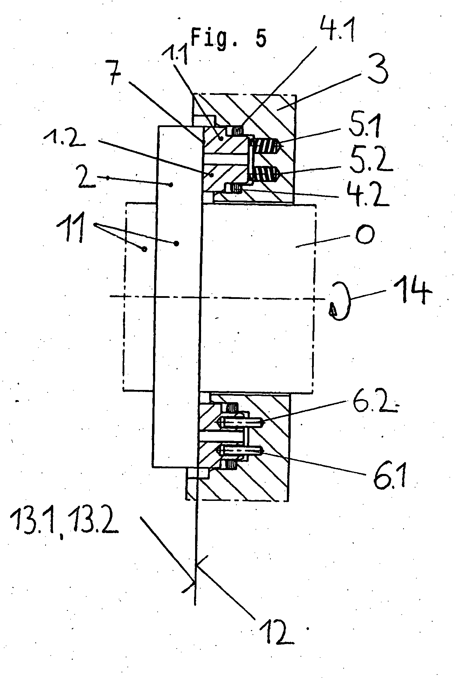

In Figur 5 ist eine Gleitringdichtung in Koaxialanordnung gezeigt. Zusätzlich zu der Gleitringdichtung, die in Figur 1 gezeigt ist, ist ein zweiter Gleitring 1.2 vorgesehen, der vom ersten Gleitring 1.1 mit radialem Abstand außenumfangsseitig umschlossen ist. Die beiden Gleitringe 1.1, 1.2 sind koaxial zueinander angeordnet und legen sich beide mit ihren zweiten Dichtflächen 13.1, 13.2 an die erste Dichtfläche 12 des Gegenrings 2 dichtend an.

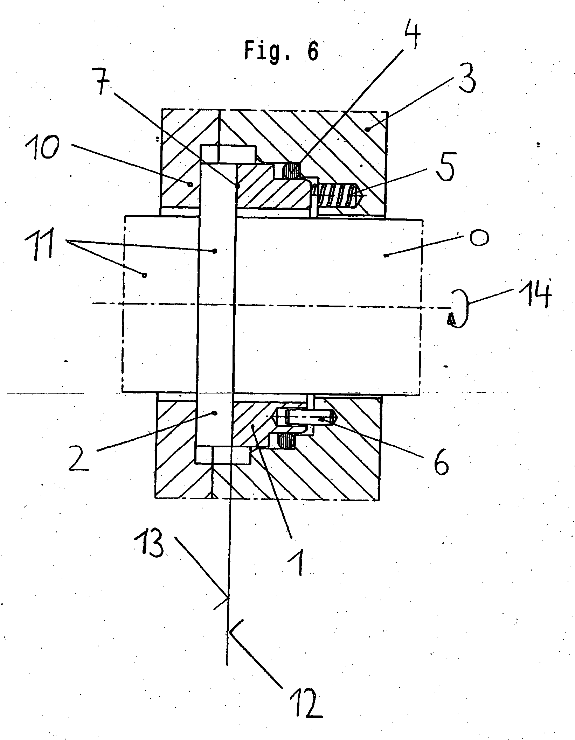

In Figur 6 ist eine Gleitringdichtung wie in Figur 1 gezeigt, die gegen ein Axiallager 10 angeordnet ist.

## Patentansprüche

1. Gleitringdichtung, die eine abzudichtende Welle (0) umschließt, umfassend einen Gegenring (2), wobei die Welle (0) einen Bestandteil der Gleitringdichtung bildet und einstückig ineinander übergehend und materialeinheitlich mit dem Gegenring (2) ausgebildet ist, wobei der Gegenring (2) eine erste Dichtfläche (12) aufweist, die in axialer Richtung elastisch nachgiebig eine zweite Dichtfläche (13) eines Gleitrings (1) dichtend anliegend berührt, **dadurch gekennzeichnet, dass** die erste Dichtfläche (12) des Gegenrings (2), der einstückig ineinander übergehend und materialeinheitlich mit der Welle (0) ausgebildet ist, gleichmäßig in Umfangsrichtung (14) zueinander benachbart angeordnete gasförderwirksame Ausnehmungen (8) aufweist, die sich im Wesentlichen in radialer Richtung erstrecken.

2. Gleitringringdichtung nach Anspruch 1, **dadurch gekennzeichnet, dass** der Gegenring (2) und die Welle (0) eine Einheit (11) bilden, die aus einem gehärteten Stahl besteht.

3. Gleitringdichtung nach Anspruch 2, **dadurch gekennzeichnet, dass** die Einheit (111) spanabhebend erzeugt ist.

4. Gleitringdichtung nach einem der Ansprilche 2 oder 3, **dadurch gekennzeichnet, dass** die Einheit (11) durch Drehen erzeugt ist.

5. Gleitringdichtung nach einem der Ansprüche 1 bis 4, **dadurch gekennzeichnet, dass** die erste Dichtfläche (12) eine Rautiefe Ra von 0,1 bis 0,3 aufweist.

6. Gleitringdichtungsanordnung, umfassend eine Gleitringdichtung nach einem der Ansprüche 1 bis 5, die in einem Gehäuse (3) angeordnet ist.

7. Verfahren zur Herstellung einer Gleitringdichtung oder einer Gleitringdichtungsanordnung gemäß einem der Ansprüche 1 bis 6, **dadurch gekennzeichnet, dass** die Einheit (11), umfassend die Welle (1) und den Gleitring (2) und die gasförderwirksamen Ausnehmungen (8) im Gleitring (2) in nur einer Aufspannung durch Drehen hergestellt werden.

## Claims

1. Slide ring seal which encloses a shaft (0) to be sealed, comprising a counter-ring (2), the shaft (0) forming a constituent part of the slide ring seal and being configured with the counter-ring (2) such that they are made from the same material and merge integrally into one another, the counter-ring (2) having a first sealing face (12) which makes contact with a second sealing face (13) of a slide ring (1) so as to bear against it in a sealing manner and so as to be elastically resilient in the axial direction, **characterized in that** the first sealing face (12) of the counter-ring (2) which is configured with the shaft (0) such that they are made from the same material and merge integrally into one another has recesses (8) which act to convey gas, are arranged uniformly adjacently to one another in the circumferential direction and extend substantially in the radial direction.

2. Slide ring seal according to Claim 1, **characterized in that** the counter-ring (2) and the shaft (0) form a unit (11) which consists of a hardened steel.

3. Slide ring seal according to Claim 2, **characterized in that** the unit (11) is produced using machining.

4. Slide ring seal according to either of Claims 2 and 3, **characterized in that** the unit (11) is produced by way of turning.

5. Slide ring seal according to one of Claims 1 to 4, **characterized in that** the first sealing face (12) has a surface roughness Ra of from 0.1 to 0.3.

6. Slide ring seal arrangement, comprising a slide ring seal according to one of Claims 1 to 5 which is arranged in a housing (3).

7. Method for producing a slide ring seal or a slide ring seal arrangement according to one of Claims 1 to 6, **characterized in that** the unit (11), comprising the shaft (1) and the slide ring (2) and the recesses (8) in the slide ring (2) which act to convey gas, is produced by way of turning in only one setting.

## Revendications

1. Joint annulaire glissant, qui entoure un arbre à rendre étanche (0), comprenant un contre-anneau (2), dans lequel l'arbre (0) forme un composant du joint annulaire glissant et est réalisé d'un seul tenant en se prolongeant l'un dans l'autre et en continuité de matière avec le contre-anneau (2), dans lequel le contre-anneau (2) présente une première face d'étanchéité (12), qui touche en application étanche une deuxième face d'étanchéité (13) d'un anneau glissant (1) d'une façon élastiquement déformable en direction axiale, **caractérisé en ce que** la première face d'étanchéité (12) du contre-anneau (2), qui est réalisé d'un seul tenant en se prolongent l'un dans l'autre et en continuité de matière avec l'arbre (0), présente des évidements assurant le transport de gaz (8) disposés à distance l'un de l'autre de façon uniforme en direction périphérique (14), qui s'étendent essentiellement en direction radiale.

2. Joint annulaire glissant selon la revendication 1, **caractérisé en ce que** le contre-anneau (2) et l'arbre (0) forment une unité (11), qui est constituée d'un acier trempé.

3. Joint annulaire glissant selon la revendication 2, **caractérisé en ce que** l'unité (11) est produite par enlèvement de copeaux.

4. Joint annulaire glissant selon l'une des revendications 2 ou 3, **caractérisé en ce que** l'unité (11) est produite par tournage.

5. Joint annulaire glissant selon l'une quelconque des revendications 1 à 4, **caractérisé en ce que** la première face d'étanchéité (12) présente une profondeur de rugosité Ra de 0,1 à 0,3.

6. Agencement de joint annulaire glissant, comprenant un joint annulaire glissant selon l'une quelconque des revendications 1 à 5, qui est disposé dans un boîtier (3).

7. Procédé de fabrication d'un joint annulaire glissant ou d'un agencement de joint annulaire glissant selon l'une quelconque des revendications 1 à 6, **caractérisé en ce que** l'on fabrique en un seul montage par tournage l'unité (11), comprenant l'arbre (1) et le joint glissant (2), et les évidements assurant le transport de gaz (8) dans le joint glissant (2).
